# EUROPÄISCHE PATENTSCHRIFT

(11) **EP 2 444 704 B1**
(45) Veröffentlichungstag und Bekanntmachung des Hinweises auf die Patenterteilung: **31.07.2013**
(21) Anmeldenummer: 11186223.1
(22) Anmeldetag: 21.10.2011
(51) Int. Cl.: F16L 15/00, F16L 19/02, F24J 2/46, F28F 9/26

(54) **Rohrkupplung**
Pipe coupling
Accouplement tubulaire

(30) Priorität: 21.10.2010 CH 17322010
(43) Veröffentlichungstag der Anmeldung: 25.04.2012
(73) Patentinhaber: SC Sunpower Concept Est., 9496 Balzers (CH)
(72) Erfinder: Roth, Max, 7310 Bad Ragaz (CH)
(74) Vertreter: Hasler, Erich

(56) Entgegenhaltungen:
- EP-A2- 2 133 613
- CH-A- 200 132
- DE-C- 929 100
- DE-U- 7 133 371
- DE-U1- 20 209 222
- DE-U1-202004 005 579
- FR-A- 1 434 397
- FR-A1- 2 493 969
- FR-A1- 2 571 120
- GB-A- 380 557
- JP-A- 2003 021 404
- JP-U- 55 010 069
- JP-U- 56 050 955
- JP-U- 60 041 762
- JP-U- 60 104 674
- US-A- 5 906 399
- US-A1- 2003 075 921
- US-A1- 2005 012 333

## Beschreibung

### Gebiet der Erfindung

Die Erfindung betrifft eine Anordnung von einem ersten und zweiten nebeneinander abgeordneten Wärmetauscher.

### Stand der Technik

Bei Solaranlagen bzw. Sonnenkollektoren des Stands der Technik ist zumeist eine Mehrzahl von Wärmetauschern in Serie geschaltet und nebeneinander angeordnet. Die Wärmetauscher sind an einem Halterahmen möglichst eng aneinander festgelegt, um eine möglichst dicht gepackte Anlage zu erhalten. Die Wärmetauscher besitzen Rohrstücke für den Ein- und Austritt eines Wärmetransfermediums. Zwei fluchtende Rohrstücke benachbarter Wärmetauscher sind mit einer Rohrkupplung zu verbinden. Solche Rohrkupplungen bestehen oft aus einem ersten und zweiten Kupplungsteil, welche miteinander verschraubt sind und durch die Verschraubung Schneidringe in die Rohrstücke eingepresst werden. Da die Wärmetauscher nicht verschiebbar sind, müssen beispielsweise bei Wartungs- oder Reparaturarbeiten eines einzelnen nicht randständigen Wärmetauschers, eine Mehrzahl von Wärmetauschern ausgebaut werden, um den einzelnen Wärmetauscher aus dem Halterahmen entfernen zu können. Instandhaltungsarbeiten gestalten sich daher als äusserst aufwendig und dementsprechend zeitintensiv. Ein weiterer Nachteil der Verbindungen der Wärmetauscher des Stands der Technik ist, dass die verbundenen Rohrstücke nicht längsverschiebbar aufgenommen sind. Wärmeausdehnungen der Wärmetauscher führen daher zu erheblichen Spannungen, da die Wärmeausdehnungen nicht kompensierbar sind. Diese Spannungen führen zu Undichtigkeiten im Kreislauf des Wärmetransfermediums.

Eine Ausführungsform einer Rohrkupplung ist dreiteilig ausgebildet. In einem Verbindungsstück, in das die zu verbindenden Rohrenden einsteckbar sind, sind an beiden Enden des Verbindungsstücks Schneidringe angeordnet, um den Übergang zwischen den Rohrenden und dem Verbindungsstück abzudichten. Das Übergangsstück besitzt an seinen beiden Enden ein Aussengewinde, welches jeweils mit dem Innengewinde winde zweier überwurfmuttern zusammenwirkt. Die Schneidringe und die Überwurfmutter sind konisch ausgeformt, sodass durch Anziehen der Mutter die Schneidringe gleichzeitig an das Rohrende und das Übergangsstück gepresst werden. Dadurch wird eine dichtende Wirkung zwischen Schneidring, Rohrende und Übergangsstück erreicht.

In der JP 2003 021404 ist ein Rohrfitting zur Verbindung von zwei Solarkollektoren beschrieben. Das Rohrfitting besteht aus einem ersten und zweiten Rohrkupplungsteil, deren zugewandte Enden ineinander schiebbar sind und durch einen O-Ring abgedichtet sind. Ein Fortsatz des ersten Rohrkupplungsteils ist entlang des O-Rings gleitbar in dem zweiten Rohrkupplungsteil aufgenommen. Ist das zweite Rohrkupplungsteil vollständig auf den Fortsatz aufgeschoben ist die Verbindung zu einem der beiden Sonnenkollektoren gelöst.

Die JP 2003-21404 A offenbart somit eine Anordnung von einem ersten und einem zweiten nebeneinander angeordneten Wärmetauscher von Sonnenkollektoren, mit einem am ersten Wärmetauscher angeordneten ersten Rohrstück und einem am zweiten Wärmetauscher angeordneten zweiten Rohrstück für den Ein- resp. Austritt eines Wärmetransfermediums, welche Rohrstücke paarweise miteinander fluchten, sowie mit einer Rohrkupplung, welche die fluchtenden Rohrstücken miteinander verbindet, wobei die Rohkupplung aufweist: ein Kupplungsteil mit einem ersten und zweiten Ende, einer ersten Durchgangsöffnung, einer in der ersten Durchgangsöffnung vorgesehenen ersten Nut, in der ein erster Dichtring zur fluiddichtenden Aufnahme des ersten Rohrstückes aufgenommen ist, einer zweiten Durchgangsöffnung und einer in der zweiten Durchgangsöffnung vorgesehenen zweiten Nut, in der ein zweiter Dichtring zur fluiddichtenden Aufnahme des zweiten Rohrstückes aufgenommen ist.

Die CH 200 132 zeigt eine Verbindung für Rohre ohne Gewinde. Dabei ist eine erste Rohrmuffe mit eine zweiten Rohrmuffe verschraubbar. Durch Verschrauben der beiden Rohrmuffen wirken Dichtungen zwischen Rohrmuffen und Rohrenden als Klemmringe, wodurch die beiden einander zugewandten Rohrenden flüssigkeitsdicht miteinander verbunden werden.

Die FR 2 571 120 offenbart eine Vorrichtung zur Verbindung zweier Rohre. Die Vorrichtung umfasst ein erstes und zweites Verbindungselement, welche miteinander verschraubbar sind. Zur Aufnahme von Kugelgelenken sind an den Innenseiten der Verbindungselemente sphärische Ausnehmungen vorgesehen. Die Kugelgelenke sind durch zwei abgeschrägte Ringe und einem zwischen dem Ringen angeordneten Dichtring gebildet. In die Kugelgelenke sind die Rohrenden eingeschoben. Die Vorrichtung hat den Vorteil, dass sich die Rohre durch die Kugelgelenke um ihre Längsachse verkippen lassen. Eine Verschiebung der Rohre in axialer Richtung ist auch möglich. Der Nachteil der Kugelgelenke liegt darin, dass das erste und zweite Verbindungselement relativ lang sein müssen, um die Kugelgelenke aufnehmen zu können. Ferner sind die Kugelgelenke, deren sphärischen Aufnahmen in den Verbindungselementen und Ausnehmungen, welche für die Verkippung der Rohre Platz schaffen, aufwendig herzustellen.

Aus der US 2003/0075921 ist ein Rohrverbinder für hydraulische Leitungen bekannt. Der Verbinder aus einem ersten und zweiten Verbindungsteil, welche miteinander verschraubbar sind. Das erste und zweite Verbindungsteil lassen sich auf die Rohrenden zweier zu verbindender Rohre aufschieben. Die Rohrenden sind in axialer Richtung unverschieblich in dem ersten und zweiten Verbindungsteil aufgenommen. Einerseits wird dies erreicht, indem an dem ersten und zweiten Verbindungsteil Absätze vorgesehen sind, welche den Innendurchmesser des ersten und zweiten Verbindungsteils reduzieren. Die Absätze dienen den Rohrenden daher als Anlage. Andererseits sind an dem ersten und zweiten Verbindungsteil Verschlussringe vorgesehen, welche in Nuten an den Rohrenden einschnappen. Die Abdichtung der Rohrenden gegenüber dem ersten und zweiten Verbindungsteil erfolgt durch O-Ringe. Die Abdichtung zwischen dem ersten und zweiten Verbindungsteil erfolgt ebenfalls durch einen O-Ring, welcher zwischen den einander zugewandten Stirnseiten der Verbindungsteile während des Verschraubens komprimiert wird. Der O-Ring hat den Nachteil, dass er bei zu starkem Anziehen der Verbindungsteile gequetscht werden kann und undicht wird. Ausserdem ist er leicht verlierbar, da er lediglich in eine Nut eingelegt ist. Eine Verschiebung der Rohrenden, beispielsweise infolge von Wärmedehnung, ist bei diesem Rohrverbinder nicht möglich. Im Gegenteil, es werden obenstehende Massnahmen ergriffen, um eine Verschiebbarkeit der Rohrenden zu verhindern.

In der US 2005/0012333 ist ein einteiliger Verbindungsadapter zur Verbindung eines ersten und zweiten Rohrs gezeigt. Das eine Ende des Verbindungsadapters ist mit dem ersten Rohr verschraubt, sodass keine axiale Verschiebung des Rohres relativ zu dem Verbindungsadapter möglich ist. Um einen Abstand der beiden Rohrenden zu kompensieren, ist das zweite Rohr verschieblich entlang der axialen Richtung aufgenommen. Die Abdichtung erfolgt durch einen O-Ring, welcher in einer Nut des Verbindungsadapters aufgenommen ist und das zweite Rohr in Umfangsrichtung umschliesst. Die Verschiebbarkeit des zweiten Rohres wird in die eine Richtung beschränkt, indem das Rohrende aufgebördelt ist. In die andere Richtung wird die Verschiebbarkeit durch einen Ring begrenzt, welcher an der Aussenseite des zweiten Rohres in einem bestimmten Abstand vom Rohrende festgelegt ist. Der Verbindungsadapter hat den Nachteil, dass eine Verbindung aufwendig herzustellen ist, da auf das erste Rohrende ein Gewinde aufgeschnitten werden muss und das zweite Rohrende aufgebördelt wird. Ferner ist ein Lösen der Verbindung mühsam, da das Gewinde bei einer neuerlichen Verbindung neu abgedichtet werden muss und das zweite Rohr aus dem Adapter nicht mehr entfernbar ist.

Die US 5,906,399 beschreibt eine Verbindung zweier Rohre mit einer an den Innenwänden vorhandenen Schutzschicht. Die Verbindung ermöglicht es, dass die Stirnseiten der Rohre dichtend aneinandergeführt sind, ohne dass die Schutzschicht verletzt wird. Die Rohrenden besitzen ein Aussengewinde und werden in eine einteilige Hülse mit einem Innengewinde eingeschraubt. Die Rohrenden sind angefast, damit die Schutzschichten beim Umlegen an die Stirnseite der Rohre nicht verletzt werden. Die Stirnseiten werden durch beidseitiges Einschrauben in die einteilige Hülse mitsamt der Schutzschicht im Bereich der Stirnseiten verklemmt. Zur Verbesserung der Dichtigkeit kann eine der Stirnseiten die Gestalt eines Kegelstumpfes besitzen und die andere Stirnseite eine korrespondierende Oberfläche aufweisen. Ferner weist die Hülse einen abgeschrägten Vorsprung auf, welche mit Fasen am Übergang von den Stirnseiten zur Aussenseite der Rohre korrespondieren.

Für die Verbindung von Rohren unter axialer Verschiebbarkeit relativ zu einem Verbindungselement ist diese Verbindung ungeeignet, da es gerade deren Ziel ist, die Stirnseiten der Rohre fest aneinander zu pressen. Ausserdem muss zum Lösen dieser Verbindung ein Rohr verdreht werden oder die Hülse muss auf einer Seite ein Links-und auf der anderen Seite ein Rechtsgewinde aufweisen. Die Herstellung dieser Verbindung ist dementsprechend kompliziert.

### Aufgabe der Erfindung

Aufgabe der vorliegenden Erfindung ist es daher, eine Anordnung von Wärmetauschern zu zeigen, bei welchen ein einzelner nicht randständiger Wärmetauscher aus der Anordnung entfernbar ist, ohne weitere Wärmetauscher ausbauen zu müssen. Ein weiteres Ziel ist es eine Anordnung von Wärmetauschern zu schaffen, bei welcher keine Spannungen in Folge von Materialdehnungen entstehen. Noch ein Ziel ist es eine Rohrkupplung vorzuschlagen, die für die Verbindung von Wärmetauschern bzw. Solarkollektoren geeignet ist.

### Beschreibung

Erfindungsgemäss wird die Aufgabe mit einer Anordnung gemäss Anspruch 1 dadurch, dass die Summe der axialen Erstreckung des ersten und zweiten Kupplungsteils vorteilhaft kleiner oder gleich der Summe der axialen Erstreckung der Rohrstücke und des Spaltabstands ist. Diese Bedingung ermöglicht es, dass das erste und zweite Kupplungsteil voneinander trennbar sind, ohne dass diese von den benachbarten Wärmetauschern behindert wären. Ferner ist der axiale Abstand der in dem ersten und zweiten Kupplungsteil aufgenommenen Dichtringe im zusammengesetzten Zustand des ersten und zweiten Kupplungsteils grösser als der Spaltabstand der einander zugewandten Enden der Rohrstücke ist. Durch diese Bedingung ist sichergestellt, dass beide freien Enden der Rohrstücke durch die Dichtringe in der Rohrkupplung gehalten und abgedichtet sind. Durch Lösen der Rohrkupplung lässt sich auch kontrollieren, ob die einander zugewandten Enden der Rohrstücke einen ausreichenden Spaltabstand voneinander haben. Nach der Sichtkontrolle sind die beiden Kupplungsteile einfach wieder miteinander zu verschrauben.

In einer bevorzugten Ausführungsform ist bei Aufnahme des ersten Rohrstücks in dem ersten Kupplungsteil und Aufnahme des zweiten Rohrstücks in dem zweiten Kupplungsteil die axiale Erstreckung zwischen dem ersten Dichtring und dem zweiten Ende des zweiten Kupplungsteils grösser als die Summe aus der axialen Erstreckung des zweiten Rohrstücks und des Spaltabstands. Durch diese Bedingung ist sichergestellt, dass die Rohrkupplung, wenn sie an das dem Spalt abgewandte Ende des zweiten Rohrstücks rutschen sollte, weiterhin die beiden Rohrstücke abdichtet.

In einer weiteren bevorzugten Ausführungsform ist die axiale Erstreckung zwischen dem zweiten Dichtring und dem ersten Ende des ersten Kupplungsteils grösser als die Summe aus der axialen Erstreckung des ersten Rohrstücks und des Spaltabstands, wenn die Rohrstücke mit der Rohrkupplung verbunden sind. Durch diese Bedingung ist auch sichergestellt, dass die Rohrkupplung, wenn sie an das dem Spalt abgewandten Ende des ersten Rohrstücks rutschen sollte, weiterhin die beiden Rohrstücke abdichtet.

Dadurch, dass der Spaltabstand grösser als die maximal mögliche axiale Wärmeausdehnung der Rohrstücke ist, dient die Rohrkupplung auch als ein Kompensator, da die Rohrstücke bei einer axialen Wärmeausdehnung entlang der Dichtringe gleiten können, ohne dass die dichtende Wirkung dabei verloren gehen würde.

In einem bevorzugten Ausführungsbeispiel beträgt im zusammengeschraubten Zustand des ersten und zweiten Kupplungsteils das Verhältnis der Breite (Durchmesser) zur Länge der Rohrkupplung 1:1,5, bevorzugt 1:1,3 und besonders bevorzugt ungefähr 1:1. Dies zeigt, dass die axiale Erstreckung durch die Merkmale des Hauptanspruchs im Verhältnis zur Breite bzw. dem Durchmesser der Rohrkupplung sehr gering ist. Die Breite resp. der Durchmesser der Kupplungsvorrichtung beträgt zwischen 50 und 20 mm, bevorzugt zwischen 45 und 25 mm und besonders bevorzugt zwischen 30 und 35 mm. Dementsprechend ergeben sich die Längen der zusammengesetzten Kupplungsvorrichtung. Besonders bevorzugt beträgt die Länge der zusammengeschraubten Kupplungsvorrichtung zwischen 25 und 35 mm. Bei dem ersten und zweiten Kupplungsteil verhalten sich die Längen der Stutzen zu den Längen der Angriffsmittel zwischen 1 : 1 bis 1,2 : 1.

Ein weiterer Aspekt der Erfindung betrifft eine erfindungsgemäße Anordnung mit einer Rohrkupplung, welche im zusammengeschraubten Zustand des ersten und zweiten Kupplungsteils die erste und zweite Durchgangsöffnung zu einer gemeinsamen, durchgehenden, fast spaltfreien zylindrischen Durchgangsöffnung fluchten, welche einen im Wesentlichen konstanten Durchmesser hat. Als fast spaltfrei soll in diesem Zusammenhang ein Spalt von vorzugsweise höchstens 1 mm verstanden sein.

Durch das Vorsehen der gemeinsamen zylindrischen Durchgangsöffnung ist die axiale Erstreckung der Rohrkupplung gering, da keinerlei Erweiterungen oder Verengungen an den Innenseiten der Durchgangsöffnungen vorhanden sind. Solche Erweiterungen und Verengungen würden Platz benötigen und die axiale Erstreckung der zweiteiligen Rohrkupplung unerwünscht verlängern. Daher sind mit der Rohrkupplung auch kurze Rohrstücke miteinander verbindbar.

Durch die durchgehende zylindrische gemeinsame Durchgangsöffnung sind die zu verbindenden Rohrstücke innerhalb der Durchgangsöffnung geführt. Die Rohrstücke sind nicht oder nur geringfügig um ihre Längsachsen verkippbar, da die Durchgangsöffnung den Rohrstücken als Anlage dienen. Undichtigkeiten, welche durch Verkippen der in der Rohrkupplung aufgenommenen Rohrstücke zustande kommen sind durch dieses Merkmal verhindert.

Die Rohrkupplung der erfindungsgemäßen Anordnung besteht lediglich aus zwei Teilen und besitzt daher nur eine Übergangsstelle der beiden Kupplungsteile, welche fluiddichtend auszuführen ist. Die Übergangsstelle ist vorzugsweise selbstdichtend und in ihrer Funktion unabhängig von den übrigen in der Durchgangsöffnung angeordneten Dichtringen. Durch die Zweiteiligkeit der Rohrkupplung in Kombination mit deren kurzen axialen Erstreckung ist es ermöglicht, dass die Rohrstücke voneinander trennbar sind, ohne dass selbige aus der Rohrkupplung zu ziehen sind. Dies ist insbesondere bei kurzen Rohrstücken, welche an Behälter oder Rohre bzw. Armaturen anschliessen, über welche die Rohrkupplung nicht verschiebbar ist, von Bedeutung. Die axial verschiebliche Aufnahme der Rohrstücke ermöglicht es, dass die Rohrkupplung zusätzlich als ein Kompensator wirken kann, beispielsweise wenn sich die Rohrstücke in Folge einer Temperaturerhöhung ausdehnen. Die Rohrkupplung der erfindungsgemäßen Anordnung ist dafür ausgelegt, bis zu 15 bar Überdrück und Betriebstemperaturen bis zu 150 °C standzuhalten.

Als vorteilhaft erweist es sich, wenn die erste Nut in kurzem Abstand vom ersten Ende des ersten Kupplungsteils und die zweite Nut in kurzem Abstand vom zweiten Ende des zweiten Kupplungsteils vorgesehen sind. Kurz soll in diesem Zusammenhang eine Distanz von 8mm, bevorzugt 7mm und ganz bevorzugt 5 mm bedeutenDurch diese Anordnung der Nuten sind die Dichtringe platzsparend angeordnet und können auch kurze Rohrstücke fluiddichtend aufnehmen.

Dadurch, dass am ersten Ende des ersten Kupplungselements vorteilhaft ein zweites Angriffsmittel für ein Werkzeug zur Drehmomentübertragung vorgesehen ist, kann beim Verschrauben der beiden Kupplungsteile ein Kupplungsteil gegengehalten werden, während das andere Kupplungsteil verdreht wird.

Zweckmässigerweise haben das erste und das zweite Kupplungsteil im Wesentlichen die gleiche axiale Erstreckung. Dadurch ist bei der Montage der Kupplungsteile auf die Rohrstücke nicht darauf zu achten, auf welches Rohrstück das jeweilige Kupplungsteil aufgesteckt wird. Voraussetzung dafür ist selbstverständlich, dass beide Rohrstücke denselben Durchmesser besitzen.

Mit Vorteil sind die Aussenabmessungen des zweiten Angriffsmittels derart dimensioniert, dass zwischen dem zweiten Angriffsmittel und dem Innengewinde das zweite Kupplungsteil eine Wandstärke von 0,5 bis 3 mm, bevorzugt von 1 bis 2 mm und ganz besonders bevorzugt von 1,2 bis 1,7 mm besitzt. Durch die an die Abmessungen des Innengewindes angepassten Abmessungen des zweiten Angriffsmittels lässt sich das Innengewinde zuverlässig mit dem Aussengewinde verschrauben. Die direkte Aufnahme des Innengewindes in dem zweiten Kupplungsteil ermöglicht es, dass die Rohrkupplung eine geringe axiale Erstreckung aufweist. Durch die Einhaltung dieser Mindestwandstärken ist das Innengewinde ausreichend stabil und wird beim Festziehen durch Überbeanspruchung nicht deformiert.

In einer bevorzugten Ausführungsform sind die Angriffsmittel des ersten und zweiten Kupplungsteils als regelmässige Mehrkant-Profile, vorzugsweise 6-Kant Profile mit im Wesentlichen denselben Abmessungen ausgebildet. Dadurch können das erste und zweite Kupplungsteil beispielsweise mit Gabelschlüsseln der gleichen Schlüsselweite miteinander verschraubt werden. Denkbar ist es auch, dass der 6-Kant des ersten Kupplungsteils eine geringere Schlüsselweite als der 6-Kant des zweiten Kupplungsteils aufweist, da am ersten Kupplungsteil die Wandstärke zwischen Durchgangsöffnung und 6-Kant auch geringer dimensioniert sein könnte, als bei der oben beschriebenen Ausführungsform. Diese Ausführungsform hat den Vorteil, dass zwei Gabelschlüsseln verschiedener Schlüsselweiten oftmals eher zur Hand sind, als Gabelschlüsseln der gleichen Schlüsselweite.

Mit Vorteil haben die erste und zweite Durchgangsöffnung im Wesentlichen den gleichen Innendurchmesser. Dadurch ist es ermöglicht, Rohrstücke von im Wesentlichen gleichem Aussendurchmesser durch die Rohrkupplung zu verbinden. Es versteht sich, dass auch Rohrstücke mit verschiedenen Aussendurchmessern mittels der Rohrkupplung verbindbar sind. Für diese Anwendung, bei der die Rohrkupplung als ein Reduzierstück anwendbar ist, sind die Durchgangsöffnungen an die jeweiligen Aussendurchmesser der Rohrstücke bei der Herstellung der Rohrkupplung anzupassen.

In einer besonders bevorzugten Ausführungsform ist an dem zweiten Kupplungsteil am Gewindeende ein umlaufender vorzugsweiser konischer Dichtrand ausgebildet, welcher mit einem komplementär ausgebildeten Rand am zweiten Ende des ersten Kupplungsteils zusammenwirken kann. Diese Form der Abdichtung ist einfach herstellbar, ist durch Festziehen der beiden Kupplungsteile relativ zueinander ausreichend dicht und bedarf keiner zusätzlichen Dichtmittel. Für die Erzielung der dichtenden Wirkung zwischen der Fase und dem Fortsatz ist noch von Bedeutung, dass das Aussengewinde eine grössere axiale Erstreckung als das Innengewinde ausweist. Selbstverständlich können zur Abdichtung des Übergangs zwischen erstem und zweitem Kupplungsteil andere abdichtende Massnahmen zur Anwendung kommen. Dazu zählen beispielsweise die Abdichtung des Gewindes mit Hanf, Teflonband oder einer Dichtungsmasse, ein kegelig geschnittenes Aussen- oder Innengewinde, oder das Einlegen eines Dichtrings oder einer Flachdichtung im Bereich des Endes des Aussen-oder Innengewindes.

Mit Vorteil sind das erste und das zweite Kupplungsteil aus identischen Rohlingen gefertigt. Dadurch können die Herstellkosten gering gehalten werden, da die Stückzahl der notwendigen Rohlinge zur Herstellung der beiden Kupplungsteile verdoppelt werden kann, und die Unterschiede an den beiden Kupplungsteilen erst durch Einschneiden der entsprechenden Gewinde und Nuten entstehen.

In einem weiteren bevorzugten Ausführungsbeispiel weisen die erste und zweite Durchgangsöffnung einen Innendurchmesser von 21 bis 16 mm, bevorzugt von 20 bis 17 mm und ganz besonders von 19 bis 18,7 mm auf. Dadurch sind das erste und zweite Rohrkupplungsteil zur Aufnahme von Rohrstücken mit einem Aussendurchmesser von 18 mm geeignet. Dies ist insofern von Bedeutung, da im Bereich von Hybrid-Sonnenkollektoren ein Rohraussendurchmesser von 18 mm verbreitet angewendet wird. Selbstverständlich kann die Rohrkupplung der erfindungsgemäßen Anordnung auch an andere Rohraussendurchmesser angepasst sein. Die Durchgangsöffnungen dürfen nicht zu knapp bemessen sein, d.h. zwischen Durchgangsöffnungen und Rohrstücken muss Spiel vorhanden sein, da ansonsten bei einer geringen Abwinkelung der Rohrstücke relativ zur Rohrkupplung diese von der Rohrkupplung beschädigt werden könnten.

Dadurch, dass die Schlüsselweite der 6-Kant-Profile 30 mm beträgt, ist wie schon weiter oben ausgeführt, bei Verbindung zweier Rohrstücke mit 18 mm Aussendurchmesser ausreichend Futter vorhanden, um am zweiten Kupplungsteil ein Innengewinde mit entsprechenden Abmessungen zur Aufnahme des Aussengewindes des ersten Kupplungsteils vorzusehen.

Weitere Vorteile und Merkmale ergeben sich aus der nachfolgenden Beschreibung eines Ausführungsbeispiels der Erfindung unter Bezugnahme auf die schematischen Darstellungen. Es zeigen in nicht massstabsgetreuer Darstellung:
- Figur 1:: eine Vorderansicht und eine teilweise Schnittdarstellung eines ersten Kupplungsteils;
- Figur 2:: eine Vorderansicht und eine teilweise Schnittdarstellung eines zweiten Kupplungsteils;
- Figur 3:: eine Rohrkupplung der erfindungsgemäßen Anordnung in Schnittdarstellung mit dem ersten und zweiten Kupplungsteil aus Figur 1 bzw. 2 in einem zusammengeschraubten Zustand;
- Figur 4:: zwei nebeneinander angeordnete Wärmetauscher;
- Figur 5:: die Wärmetauscher aus Figur 4, welche durch zwei Rohrkupplungen gemäss Figur 3 verbunden sind; und
- Figur 6:: eine detaillierte Schnittdarstellung der Rohrkupplung.

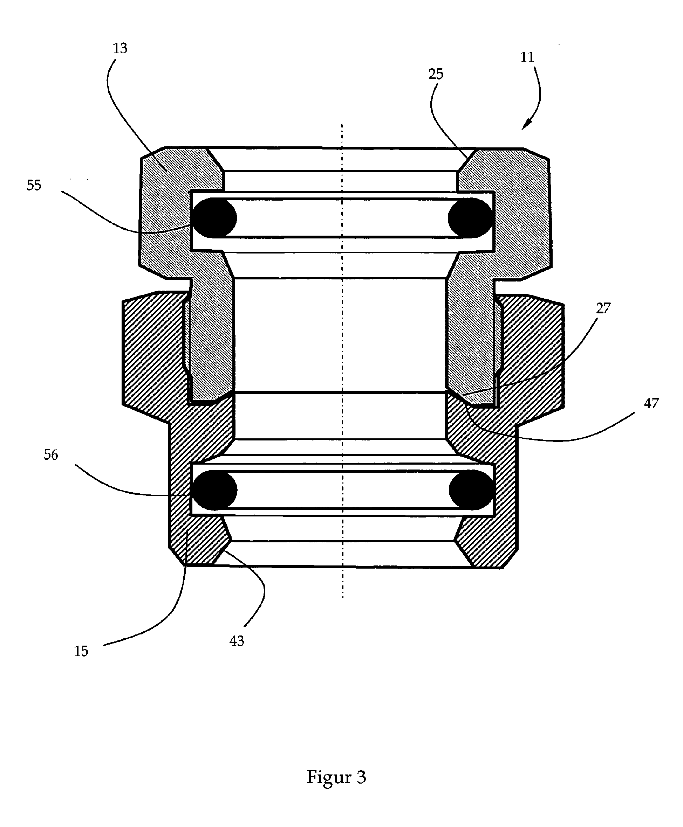

In den Figuren 3, 5 und 6 ist eine Rohrkupplung 11 der erfindungsgemäßen Anordnung dargestellt. Die Rohrkupplung 11 besteht aus einem ersten Kupplungsteil 13 und einem zweiten Kupplungsteil 15. Das erste Kupplungsteil 13 weist ein erstes und zweites Ende 17,19 auf und ist von einer ersten kreiszylindrischen Durchgangsöffnung 21 durchdrungen. In der ersten Durchgangsöffnung 21 ist im Bereich des ersten Endes 17 eine umlaufende erste Nut 23 vorgesehen, welcher der Aufnahme eines Dichtrings dient. Die Anordnung eines Dichtrings ermöglicht die selbstdichtende Aufnahme eines Rohrendes in dem ersten Kupplungsteil 13, wobei der Innendurchmesser der ersten Durchgangsöffnung 21 geringfügig grösser als der Aussendurchmesser des Rohrendes ist. Beträgt der Aussendurchmesser des Rohrendes beispielsweise 18 mm, so kann der Innendurchmesser der ersten Durchgangsöffnung 21 18,5 mm betragen. Zur vereinfachten Einführung des Rohrendes ist das dem Rohrende zugewandte Ende der ersten Durchgangsöffnung 21 mit einer ersten Fase 25 versehen. Das dem Rohrende abgewandte Ende der Durchgangsöffnung 21 ist mit einer zweiten Fase 27 versehen. Die zweite Fase 27 dient der dichtenden Verbindung des ersten und zweiten Kupplungsteils 13,15.

Das erste Kupplungsteil 13 besitzt einen Stutzen 29, auf welchen ein Aussengewinde 31 aufgeschnitten ist. Am ersten Ende 17 ist ein erster Aussen-6-Kant 33 ausgebildet, welcher an den Stutzen 29 angeschlossen ist. Der erste Aussen-6-Kant 33 dient einem Gabelschlüssel als Angriffsfläche, um ein Drehmoment auf das erste Kupplungsteil 13 übertragen zu können.

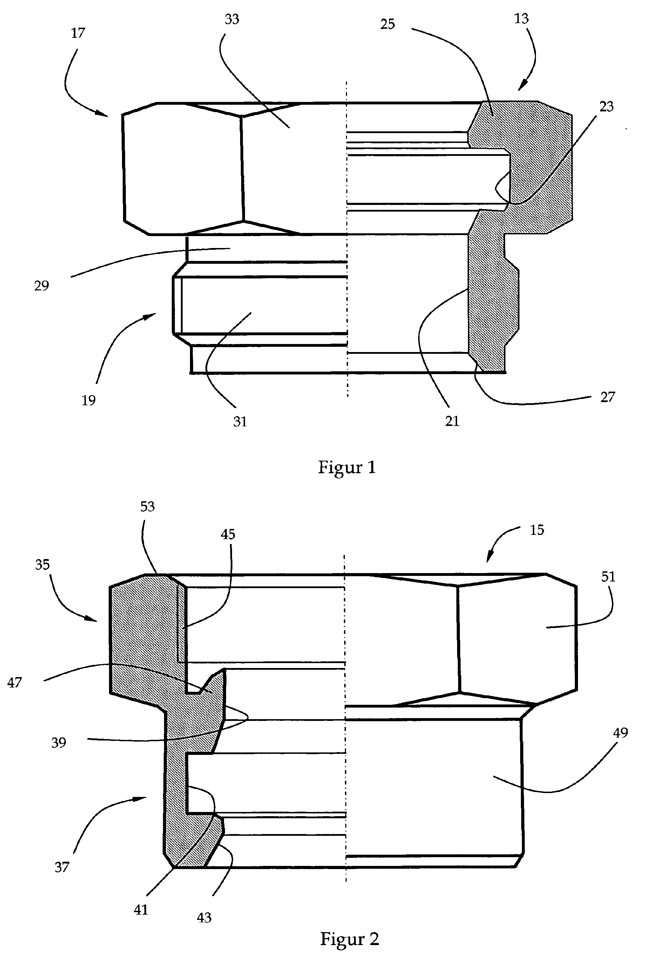

Wie Figur 2 zeigt, ist das zweite Kupplungsteil 15 in ähnlicher Weise wie das erste Kupplungsteil 13 aufgebaut und hat auch ein erstes und zweites Ende 35,37. In dem zweiten Kupplungsteil 15 ist eine zweite kreiszylindrische Durchgangsöffnung 39 vorgesehen, welche vorzugsweise denselben Innendurchmesser wie die erste Durchgangsöffnung 21 hat. Eine zweite Nut 41 ist im Bereich des zweiten Endes 37 vorgesehen. Zur vereinfachten Aufnahme eines Rohrendes ist an dem dem Rohrende zugewandten Ende der zweiten Durchgangsöffnung 39 eine dritte Fase 43 ausgebildet. Im Bereich des ersten Endes 35 ist in die zweite Durchgangsöffnung 39 ein Innengewinde 45 geschnitten. Das Innengewinde 45 wirkt mit dem Aussengewinde 31 des ersten Kupplungsteils 13 zusammen. Damit die beiden Kupplungsteile fluiddicht verbindbar sind, ist am innen liegenden Ende des Innengewindes 45 ein kegelförmiger Fortsatz 47 ausgebildet, welcher die zweite Durchgangsöffnung 39 umschliesst. Der Fortsatz 47 wirkt im festgezogenen Zustand der beiden Kupplungsteile 13,15 mit der zweiten Fase 27 zusammen, indem er an die Fase 27 gepresst ist. Zur Erreichung einer ausreichend dichtenden Wirkung, ist es nötig, dass das Aussengewinde 31 eine geringfügig grössere axiale Erstreckung als das Innengewinde 45 hat. Der Fortsatz 47 und die zweite Fase 27 sind selbstdichtend und in ihrer Funktion unabhängig von dem ersten und zweiten Dichtring 55,56.

Im Bereich des zweiten Endes 37 hat das zweite Kupplungsteil 15 die Gestalt eines zweiten Stutzens 49. An den zweiten Stutzen 49 anschliessend ist das zweite Kupplungsteil 15 als ein zweiter Aussen-6-Kant 51 ausgebildet. Vorzugsweise besitzt der zweite Aussen-6-Kant 51 dieselbe Schlüsselweite wie der erste Aussen-6-Kant 33. Von Bedeutung ist, dass die Schlüsselweite des zweiten Aussen-6-Kant 51 derart bemasst ist, dass innerhalb des Aussen-6-Kant 51 ausreichend Platz für das Innengewinde 45 vorhanden ist und demnach zwischen dem Innengewinde 45 und dem Aussen-6-Kant 51 eine Wandung 53 vorhanden ist. Die Figuren 1 und 2 zeigen, dass das erste und zweite Kupplungsteil 13,15 aus Rohlingen mit im Wesentlichen gleichen Aussenabmessungen fräsbar sind. Dadurch können die Produktionskosten niedrig gehalten werden. Das erste und zweite Kupplungsteil 13,15 haben bevorzugt gleiche Längen, welche zwischen 35 und 15, bevorzugt zwischen 30 und 20 und besonders bevorzugt zwischen 22 und 25 mm liegen. Beim Verschrauben des ersten und zweiten Kupplungsteils 13,15 verkürzt sich die Gesamtlänge der Rohrkupplung, welche sich um 5%, bevorzugt um 10% und besonders bevorzugt um 15% durch Verschrauben verkürzen lässt.

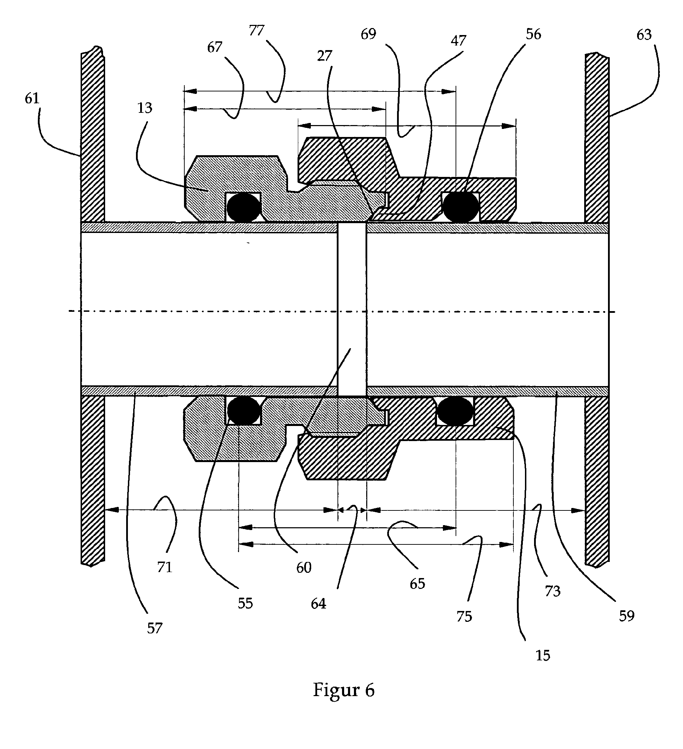

Figur 3 und 6 zeigen das erste und zweite Kupplungsteil 13,15 zusammengeschraubt in einer Schnittdarstellung. In die erste und zweite Nut 23,41 sind ein erster und zweiter Dichtring 55,56 eingelegt, deren Aussendurchmesser im Wesentlichen dem Durchmesser der Nuten 23,41 entspricht. Der Innendurchmesser der Dichtringe 55,56 ist geringfügig kleiner als der Aussendurchmesser eines ersten und zweiten Rohrstücks 57,59, welche in der Rohrkupplung 11 aufgenommen sind. Beim Einschieben des ersten und zweiten Rohrstücks 57,59 in das erste bzw. zweite Kupplungsteil 13,15, sind die Rohrstücke 57,59 sowohl flüssigkeitsdichtend als auch schwimmend, also in axialer Richtung verschieblich, in der Rohrkupplung 11 gehalten. Das heisst die Rohrkupplung 11 dient auch als ein Kompensator zum axialen Dehnungsausgleich der Rohrstücke 57,59. Da Kupferrohre im Vergleich zu Rohren aus anderen Materialien einen hohen Wärmeausdehnungskoeffizienten besitzen, ist die Kompensatorwirkung insbesondere bei der Anwendung von Kupferrohren von Bedeutung. Damit die Rohrstücke einen ausreichenden Dehnungsspielraum haben, ist zwischen diesen ein Spalt 60 vorzusehen.

Die Figuren 3 und 6 zeigen auch, wie die zweite Fase 27 mit dem Fortsatz 47 zusammenwirkt. Das erste und zweite Kupplungsteil 13,15 werden mit Hilfe des ersten und zweiten Aussen-6-Kant 33,51 miteinander verschraubt, sodass die zweite Fase 27 und die Fortsatz 47 umlaufend aneinander gepresst sind und die Durchgangsöffnungen 21,39 gegenüber dem Innen- bzw. dem Aussengewinde 31,45 abgedichtet sind. Von Bedeutung für die freie axiale Verschiebbarkeit der Rohrkupplung 11 auf den Rohrstücken 57,59 ist auch, dass durch die dichtende Verschraubung des ersten und zweiten Kupplungsteils 13,15 der Fortsatz 47 in seinem Innendurchmesser nicht oder nur unwesentlich verkleinert wird. Der Fortsatz 47 muss demnach dementsprechend dimensioniert sein, damit ein Kontakt mit dem ersten oder zweiten Rohrstück 57,59 zuverlässig verhindert ist.

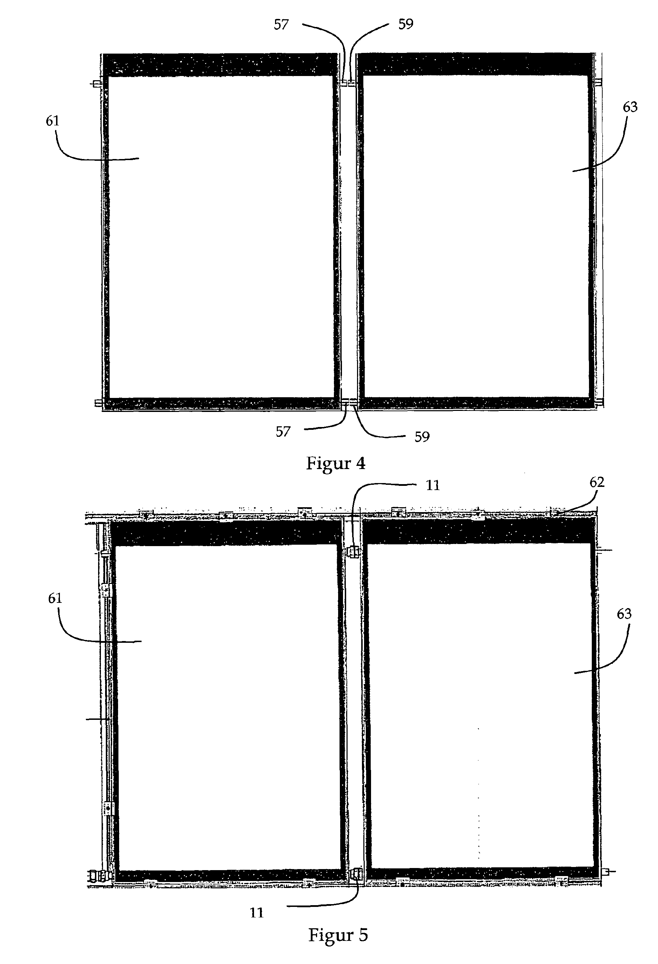

Die Rohrkupplung 11 hat eine geringe axiale Erstreckung, baut mit anderen Worten also kurz. Durch dieses Merkmal ist die Rohrkupplung 11 auch zur Verbindung von Rohrstücken 57,59 geeignet, welche im eingebauten Zustand nicht axial verschiebbar sind. Die Rohrstücke haben typischerweise eine Länge von ungefähr 20 bis 40 mm. Beispielsweise kann die Rohrkupplung 11 der fluiddichten Verbindung zweier oder mehr Flachwärmetauscher 61,63, welche in einen Hybrid-Sonnenkollektor integriert sind, dienen (Figur 4 und 5). Die Flachwärmetauscher 61,63 sind in axialer Richtung der Rohrstücke 57,59 nach dem Zusammenbau des Sonnenkollektors üblicherweise nicht mehr verschieblich (Figur 5), da diese in einer Halterung 62 eingebaut sind. Bei Verwendung von Rohrkupplungen des Stands der Technik müssen daher beispielsweise bei Wartungs- oder Reparaturarbeiten eines nicht randständigen Flachwärmetauschers, eine Mehrzahl von Flachwärmetauscher des Sonnenkollektors bis zum Rand der Wärmetauscheranordnung ausgebaut werden, um diese in axialer Richtung der Rohrstücke 57,59 verschieben und ausbauen zu können. Die Rohrkupplung 11 der erfindungsgemäßen Anordnung muss hingegen lediglich aufgeschraubt werden. Der entsprechende Flachwärmetauscher 61,63 lässt sich dann aus der Halterung herausheben, ohne dass andere benachbarte Flachwärmetauscher ausgebaut werden müssten.

Um diese Funktion erfüllen zu können, müssen einige Bedingungen, die axiale Erstreckung der beiden Kupplungsteile 13,15 betreffend, erfüllt sein. Diese Bedingungen werden anhand der Figur 6 näher erläutert:
1. Der axiale Abstand 65 der in dem ersten und zweiten Kupplungsteil 13,15 aufgenommenen Dichtringe 55,56 ist im zusammengesetzten Zustand des ersten und zweiten Kupplungsteils 13,15 grösser als der Spaltabstand 64 der einander zugewandten Enden der Rohrstücke 57,59. Wäre diese Bedingung nicht erfüllt, so würde die Rohrkupplung 11 nicht in der Lage sein, die beiden Rohrstücke 57,59 fluiddichtend zu verbinden.
2. Die Summe der axialen Erstreckung 67,69 des ersten und zweiten Kupplungsteils 13,15 ist kleiner oder gleich der Summe der axialen Erstreckung 71,73 der Rohrstücke 57,59 und des Spaltabstands 64. Der Spaltabstand 64 besitzt Abmessungen im Bereich von 2 bis 7 mm. Durch Erfüllung dieser zweiten Bedingung ist gewährleistet, dass das erste und zweite Kupplungsteil 13,15 auseinanderschraubbar sind, ohne dass die Flachwärmetauscher 61,63 den Kupplungsteilen im Weg währen.
3. Im zusammengesetzten und auf die beiden Rohrstücke 57,59 montierten Zustand des ersten und zweiten Kupplungsteils 13,15 ist die axiale Erstreckung 75 zwischen dem ersten Dichtring 55 und dem zweiten Ende 37 des zweiten Kupplungsteils 15 grösser als die Summe der axialen Erstreckung 73 des zweiten Rohrstücks 59 und des Spaltabstands 64. Durch diese Bedingung ist es verunmöglicht, dass die Rohrverbindung undicht wird, selbst wenn die Rohrkupplung 11 bis an den Flachwärmetauscher 63 während des Betriebs verrutschen sollte, da beide Dichtringe 55,56 weiterhin in Kontakt mit den Rohrstücken 57,59 stehen.
4. Im zusammengesetzten und auf die beiden Rohrstücke 57,59 montierten Zustand des ersten und zweiten Kupplungsteils 13,15 ist die axiale Erstreckung 77 zwischen dem zweiten Dichtring 56 und dem ersten Ende 17 des ersten Kupplungsteils 13 grösser als die Summe aus der axialen Erstreckung des ersten Rohrstücks 57 und des Spaltabstands 64. Dadurch kann die Verbindung der Rohrstücke 57,59 auch dann nicht undicht werden, wenn die Rohrkupplung 11 bis zum ersten Flachwärmetauscher 61 verrutschen sollte.

### Legende:

- 11: Rohrkupplung
- 13: Erstes Kupplungsteil
- 15: Zweites Kupplungsteil
- 17: Erstes Ende des ersten Kupplungsteils
- 19: Zweites Ende des ersten Kupplungsteils
- 21: Erste Durchgangsöffnung
- 23: Erste Nut
- 25: Erste Fase
- 27: Zweite Fase
- 29: Erster Stutzen
- 31: Aussengewinde
- 33: Erster Aussen-6-Kant
- 35: Erstes Ende des zweiten Kupplungsteils
- 37: Zweites Ende des zweiten Kupplungsteils
- 39: Zweite Durchgangsöffnung
- 41: Zweite Nut
- 43: Dritte Fase
- 45: Innengewinde
- 47: Kegelförmiger Fortsatz bzw. konischer Dichtrand
- 49: Zweiter Stutzen
- 51: Zweiter Aussen-6-Kant
- 53: Wandung
- 55: Erster Dichtring
- 56: Zweiter Dichtring
- 57: Erstes Rohrstück
- 59: Zweites Rohrstück
- 60: Spalt
- 61,63: Flachwärmetauscher
- 62: Wärmetauscherhalterung
- 64: Spaltabstand
- 65: Axialer Abstand der Dichtringe
- 67: Axiale Erstreckung des ersten Kupplungsteils
- 69: Axiale Erstreckung des zweiten Kupplungsteils
- 71: Axiale Erstreckung des ersten Rohrstücks
- 73: Axiale Erstreckung des zweiten Rohrstücks
- 75: Axiale Erstreckung zwischen dem ersten Dichtring und dem freien Ende des
- 77: Axiale Erstreckung zwischen dem zweiten Dichtring und dem freien Ende

## Patentansprüche

1. Anordnung von wenigstens einem ersten und einem zweiten nebeneinander angeordneten Wärmetauscher (61,63) insbesondere von Sonnenkollektoren, mit
- wenigstens einem am ersten Wärmetauscher (61) angeordneten ersten Rohrstück (57) und wenigstens einem am zweiten Wärmetauscher (63) angeordneten zweiten Rohrstück (59) für den Ein-respective Austritt eines Wärmetransfermediums, welche Rohrstücke (57,59) paarweise miteinander fluchten und
- wenigstens einer zweiteiligen Rohrkupplung (11), welche ein Paar der fluchtenden Rohrstücke (57,59) miteinander verbindet, mit
- einem ersten Kupplungsteil (13) mit
- einem ersten und zweiten Ende (17,19),
- einer ersten Durchgangsöffnung (21),
- einer in der ersten Durchgangsöffnung (21) vorgesehenen ersten Nut (23), in der zur fluiddichtenden Aufnahme des ersten Rohrstückes (57) aufgenommen ist, und ein erster Dichtring (55)
- einem Aussengewinde (31) und
- einem mit dem ersten Kupplungsteil (13) verbindbaren zweiten Kupplungsteil (15) mit
- einem ersten und zweiten Ende (35,37), wobei im verbundenen Zustand der Rohrkupplung (11) das zweite Ende (19) des ersten Kupplungsteils (13) und das erste Ende (35) des zweiten Kupplungsteils (15) einander zugewandt sind,
- einer zweiten Durchgangsöffnung (39),
- einer in der zweiten Durchgangsöffnung (39) vorgesehenen zweiten Nut (41) inder ein zweiter Dichtring (56) zur fluiddichtenden Aufrahme des zweiten Rohrstückes (59) aufgenommen ist
- einem ersten Angriffsmittel (51) für ein Werkzeug zur Drehmomentübertragung und
- einem in der zweiten Durchgangsöffnung (39) vorgesehenen. Innengewinde (45), welches Innengewinde (45) mit dem Aussengewinde (31) des ersten Kupplungsteils (13) zusammenwirken kann,
wobei
die Summe der axialen Erstreckung (67,69) des ersten und des zweiten Kupplungsteils (13,15) kleiner oder gleich der Summe der axialen Erstreckung (71,73) der Rohrstücke (57,59) und des Spaltabstands (64) der einander zugewandten Enden der Rohrstücke (57,59) ist und der axiale Abstand (65) zwischen dem in dem ersten und zweiten Kupplungsteil (13,15) aufgenommenen ersten und zweiten Dichtring (55,56) im verschraubten Zustand des ersten und zweiten Kupplungsteils (13,15) grösser als der Spaltabstand (64) der einander zugewandten Enden der Rohrstücke (57,59) ist

2. Anordnung nach Anspruch 2, **dadurch gekennzeichnet, dass** bei Aufnahme des ersten Rohrstücks (57) in dem ersten Kupplungsteil (13) und Aufnahme des zweiten Rohrstücks (59) in dem zweiten Kupplungsteil (15) im zusammengesetzten Zustand der Rohrkupplung (11) die axiale Erstreckung (75) zwischen dem ersten Dichtring (55) und dem zweiten Ende (37) des zweiten Kupplungsteils (15) grösser als die Summe aus der axialen Erstreckung (73) des zweiten Rohrstücks (59) und des Spaltabstands (64) ist.

3. Anordnung nach einem der Ansprüche 1 oder 2, **dadurch gekennzeichnet, dass** bei Aufnahme des ersten Rohrstücks (57) in dem ersten Kupplungsteil (13) und Aufnahme des zweiten Rohrstücks (59) in dem zweiten Kupplungsteil (15) im zusammengesetzten Zustand der Rohrkupplung (11) die axiale Erstreckung (77) zwischen dem zweiten Dichtring (56) und dem ersten Ende (17) des ersten Kupplungsteils (13) grösser als die Summe aus der axialen Erstreckung (71) des ersten Rohrstücks (13) und des Spaltabstands (64) ist.

4. Anordnung nach einem der Ansprüche 1 bis 3, **dadurch gekennzeichnet, dass** im zusammengeschraubten Zustand des ersten und zweiten Kupplungsteils (13,15) das Verhältnis der Breite zur Länge der Rohrkupplung (11) 1:1,5, bevorzugt 1:1,3 und besonders bevorzugt 1:1 ist.

5. Anordnung nach einem der Ansprüche 1 bis 4, **dadurch gekennzeichnet, dass** im zusammengeschraubten Zustand des ersten und zweiten Kupplungsteils (13,15) die erste und zweite Durchgangsöffnung (21,39) zu einer gemeinsamen zylindrischen Durchgangsöffnung fluchten, welche einen im Wesentlichen konstanten Durchmesser hat.

6. Anordnung nach einem der Ansprüche 1 bis 5, **dadurch gekennzeichnet, dass** das zweite Ende (19) des ersten Kupplungsteils (13) und das erste Ende (35) des zweiten Kupplungsteils (15) flüssigkeitsdicht miteinander verbindbar sind.

7. Anordnung nach einem der Ansprüche 1 bis 6, **dadurch gekennzeichnet, dass** am zweiten Ende (19) des ersten Kupplungsteils (13) die erste Durchgangsöffnung (21) eine umlaufende Fase (27) besitzt.

8. Anordnung nach Anspruch 7, **dadurch gekennzeichnet, dass** an dem zweiten Kupplungsteil (15) am Ende des Innengewindes ein konischer Dichtrand (47) vorgesehen ist, welcher die zweite Durchgangsöffnung (39) umschliesst und mit der Fase (27) des ersten Kupplungsteils (13) fluiddichtend zusammenwirken kann.

9. Anordnung nach einem der Ansprüche 1 bis 8, **dadurch gekennzeichnet, dass** am ersten Ende (17) des ersten Kupplungsteils (13) ein zweites Angriffsmittel (33) für ein Werkzeug zur Drehmomentübertragung vorgesehen ist.

10. Anordnung nach einem der Ansprüche 1 bis 9, **dadurch gekennzeichnet, dass** die erste Nut (23) in kurzem Abstand vom ersten Ende (17) des ersten Kupplungsteils (13) und die zweite Nut (41) in kurzem Abstand vom zweiten Ende (37) des zweiten Kupplungsteils (15) vorgesehen sind.

11. Anordnung nach einem der Ansprüche 1 bis 10, **dadurch gekennzeichnet, dass** das erste und das zweite Kupplungsteil (13,15) im Wesentlichen die gleiche axiale Erstreckung (67,69) haben.

12. Anordnung nach einem der Ansprüche 1 bis 11, **dadurch gekennzeichnet, dass** zwischen dem ersten Angriffsmittel (51) und dem Innengewinde (45) das zweite Kupplungsteil (15) eine Wandstärke von 0,5 bis 3 mm, bevorzugt von 1 bis 2 mm und ganz besonders bevorzugt von 1,2 bis 1,7 mm besitzt.

13. Anordnung nach einem der Ansprüche 9 bis 12, **dadurch gekennzeichnet, dass** die Angriffsmittel des ersten und zweiten Kupplungsteils (13,15) als regelmässige 6-Kant Profile (33,51) mit im Wesentlichen denselben Abmessungen ausgebildet sind.

14. Anordnung nach einem der Ansprüche 1 bis 13, **dadurch gekennzeichnet, dass** das erste und das zweite Kupplungsteil (13,15) aus im Wesentlichen identischen Rohlingen gefertigt sind.

15. Anordnung nach einem der Ansprüche 1 bis 14, **dadurch gekennzeichnet, dass** die erste und zweite Durchgangsöffnung (21,39) einen Innendurchmesser von 21 bis 16 mm, bevorzugt von 20 bis 17 mm und ganz besonders von 19 bis 18,7 mm aufweisen.

## Claims

1. Arrangement of at least one first and one second heat exchangers (61, 63) placed near each other, in particular of solar collectors, with
- at least a first pipe section (59) placed on the first heat exchanger (61) and at least a second pipe section (59) placed on the second heat exchanger (63) for the inlet and respectively the outlet of a heat transfer medium, which pipe sections (57, 59) are aligned flush with each other by pairs and
- at least one two-part pipe coupling (11) which connects one pair of the flush aligned pipe sections (57, 59) with
- a first coupling part (13) with
- a first and a second end (17, 19),
- a first passage opening (21),
- a first groove (23) provided in the first passage opening (21) in which a first sealing ring (55) is received for the fluid tight reception of the first pipe section (57) and
- an outer thread (31) and
- a second coupling part (15) that can be connected with the first coupling part (13) with
- a first and a second end (35, 37), whereby when the pipe coupling (11) is connected, the second end (19) of the first coupling part (13) and the first end (35) of the second coupling part (15) are turned to each other,
- a second passage opening (39),
- a second groove (41) provided in the second passage opening (39) in which a second sealing ring (56) is received for the fluid tight reception of the second pipe section (59),
- a first driving means (51) for a tool for the torque transmission and
- an inner thread (45) provided in the second passage opening (39), which inner thread (45) can cooperate with the outer thread (31) of the first coupling part (13),
whereby the sum of the axial extension (67, 69) of the first and of the second coupling part (13, 15) is less or equal to the sum of the axial extension (71, 73) of the pipe sections (57, 59) and the gap distance of the ends facing each other of the pipe sections (57, 59) and the axial distance (65) between the first and the second sealing ring (55, 56) received in the first and in the second coupling part (13, 15), when the first and the second coupling part (13, 15) are screwed, is higher than the gap distance (64) of the ends facing each other of the pipe sections (57, 59).

2. Arrangement according to claim 2, **characterized in that**, when the first pipe section (57) is received in the first coupling part (13) and the second pipe section (59) in the second coupling part (15), the pipe coupling (11) being assembled, the axial extension (75) between the first sealing ring (55) and the second end (37) of the second coupling part (15) is higher than the sum of the axial extension (73) of the second pipe section (59) and the gap distance (64).

3. Arrangement according to one of the claims 1 or 2, **characterized in that**, when the first pipe section (57) is received in the first coupling part (13) and the second pipe section (59) in the second coupling part (15), the pipe coupling (11) being assembled, the axial extension (77) between the second sealing ring (56) and the first end (17) of the first coupling part (13) is higher than the sum of the axial extension (71) of the first pipe section (13) and the gap distance (64).

4. Arrangement according to one of the claims 1 to 3, **characterized in that**, the first and the second coupling part (13, 15) being screwed together, the width/length ratio of the pipe coupling (11) is 1:1,5, preferable 1:1,3 and particularly preferably 1:1.

5. Arrangement according to one of the claims 1 to 4, **characterized in that**, the first and the second coupling part (13, 15) being screwed together, the first and the second passage opening (21, 39) are aligned to a common cylindrical passage opening which has a substantially constant diameter.

6. Arrangement according to one of the claims 1 to 5, **characterized in that** the second end (19) of the first coupling part (13) and the first end (35) of the second coupling part (15) can be liquid-tightly connected with each other.

7. Arrangement according to one of the claims 1 to 6, **characterized in that** the first passage opening (21) has a peripheral bevel (27) at the second end (19) of the first coupling part (13).

8. Arrangement according to claim 7, **characterized in that** a conical sealing edge (47) is provided on the second coupling part (25) at the end of the inner thread, whereby this sealing edge encloses the second passage opening (39) and can fluid-tightly cooperate with the bevel (27) of the first coupling part (13).

9. Arrangement according to one of the claims 1 to 8, **characterized in that** a second driving means (33) for a tool for the torque transmission is provided at the first end (17) of the first coupling part (13).

10. Arrangement according to one of the claim 1 to 9, **characterized in that** the first groove (23) is provided at a short distance from the first end (17) of the first coupling part (13) and the second groove (41) at a short distance from the second end (37) of the second coupling part (15).

11. Arrangement according to one of the claims 1 to 10, **characterized in that** the first and the second coupling part (13, 15) have substantially the same axial extension (67, 69).

12. Arrangement according to one of the claims 1 to 11, **characterized in that** the second coupling part (15) has a wall thickness of 0,5 to 3 mm, preferably of 1 to 2 mm and particularly preferably of 1,2 to 1,7 mm between the first driving means (51) and the inner thread (45).

13. Arrangement according to one of the claims 9 to 12, **characterized in that** the driving means of the first and second coupling part (13, 15) are configured as regular hexagonal profiles (33, 51) with substantially the same dimensions.

14. Arrangement according to one of the claims 1 to 13, **characterized in that** the first and second coupling part (13, 15) are made of substantially identical blanks.

15. Arrangement according to one of the claims 1 to 14, **characterized in that** the first and second passage opening (21, 39) have an inner diameter of 21 to 16 mm, preferably of 20 to 17 mm and particularly preferably of 19 to 18,7 mm.

## Revendications

1. Arrangement d'au moins un premier et un second échangeur thermique (61, 63) placés l'un à côté de l'autre, en particulier de collecteurs solaires, avec
- au moins une premièresection de tuyau (57) placée sur le premier échangeur thermique (61) et au moins une secondesection de tuyau (59) placée sur le second échangeur thermique (63) pour l'entrée et la sortie d'un fluide de transfert thermique,
- au moins un accouplement de tuyau en deux parties (11) qui relie une paire dessections de tuyau alignées l'une à l'autre avec
- une première pièce d'accouplement (13) avec
- une première et une seconde extrémité (17, 19),
- une première ouverture de passage (21),
- une première gorge (23) prévue dans la première ouverture de passage (21) dans laquelle un premier anneau d'étanchéité est logé pour le logement étanche au fluide dela première section de tuyau (57) et
- un filet extérieur (31) et
- une seconde pièce d'accouplement (15) qui peut être reliée à la première pièce d'accouplement (13) avec
- une première et une seconde extrémité (35, 37), la seconde extrémité (19) de la première pièce d'accouplement (13) et la première extrémité (35) de la seconde pièce d'accouplement (15) étant tournée l'une vers l'autre,
- une seconde ouverture de passage (39),
- une seconde gorge (41) prévue dans la seconde ouverture de passage (39) dans laquelle un second anneau d'étanchéité (56) est logé pour le logement étanche au fluide de la seconde section de tuyau,
- un premier moyen d'attaque (51) pour un outil pour la transmission d'un couple de rotation et
- un filet intérieur (45) prévu dans la seconde ouverture de passage (39), lequel filet intérieur (45) peut coopérer avec le filet extérieur (31) de la première pièce d'accouplement,
la somme de l'extension axiale (67, 69) de la première et de la seconde pièce d'accouplement (13, 15) étant inférieure ou égale à la somme de l'extension axiale (71, 73) de la section de tuyau et de la distance de fente (64) des extrémités tournées l'une vers l'autre de la section de tuyau (57, 59) et la distance axiale (65) entre le premier et le second anneau d'étanchéité (55, 56) logés dans la première et la seconde pièce d'accouplement (13, 15) étant, lorsque la première et la seconde pièce d'accouplement (13, 15) sont à l'état vissé, supérieure à la distance de la fente (64) des extrémités tournées l'une vers l'autre de la section de tuyau (57, 59).

2. Arrangement selon la revendication 1, **caractérisé en ce que**, lors du logement de la première section de tuyau (57) dans la première pièce d'accouplement (13) et du logement de la seconde section de tuyau (59) dans la seconde pièce d'accouplement (15), lorsque l'accouplement de tuyaux (11) est assemblé, l'extension axiale (75) entre le premier anneau d'étanchéité (55) et la seconde extrémité (37) de la seconde pièce d'accouplement (15) est supérieure à la somme de l'extension axiale (73) de la seconde section de tuyau (59) et de la distance de fente (64).

3. Arrangement selon l'une des revendications 1 ou 2, **caractérisé en ce que**, lors du logement de la première section de tuyau (57) dans la première pièce d'accouplement (13) et du logement de la seconde section de tuyau (59) dans la seconde pièce d'accouplement (15), lorsque l'accouplement de tuyaux (11) est assemblé, l'extension axiale (77) entre le second anneau d'étanchéité (56) et la première extrémité (17) de la première pièce d'accouplement (13) est supérieure à la somme de l'extension axiale (71) de la première section de tuyau (13) et de la distance de fente (64).

4. Arrangement selon l'une des revendications 1 à 3, **caractérisé en ce que**, lorsque la première et la seconde pièce d'accouplement (13, 15) sont à l'état vissé, le rapport de la largeur et de la longueur de l'accouplement de tuyau (11) est de 1:1,5, de préférence 1:1,3 et de manière particulièrement préférée 1:1.

5. Arrangement selon l'une des revendications 1 à 4, **caractérisé en ce que**, lorsque la première et la seconde pièce d'accouplement (13, 15) sont à l'état vissé, la première et la seconde ouverture de passage (21, 39) sont alignées en une ouverture de passage cylindrique commune qui a un diamètre sensiblement constant.

6. Arrangement selon l'une des revendications 1 à 5, **caractérisé en ce que** la seconde extrémité (19) de la première pièce d'accouplement (13) et la première extrémité (35) de la seconde pièce d'accouplement (15) peuvent être reliées l'une à l'autre en étant étanches au liquide.

7. Arrangement selon l'une des revendications 1 à 6, **caractérisé en ce que** la première ouverture de passage (21) possède un chanfrein périphérique (27) à la seconde extrémité (19) de la première pièce d'accouplement (13).

8. Arrangement selon la revendication 7, **caractérisé en ce qu'**il est prévu un bord d'étanchéité conique (47) sur la seconde pièce d'accouplement (15) à l'extrémité du filet intérieur, bord d'étanchéité qui entoure la seconde ouverture de passage (39) et qui peut coopérer avec le chanfrein (27) dela première pièce d'accouplement (13) en rendant étanche au liquide.

9. Arrangement selon l'une des revendications 1 à 8, **caractérisé en ce qu'**un second moyen d'attaque (33) pour un outil pour la transmission du couple de rotation est prévu à la première extrémité (17) de la première pièce d'accouplement (13).

10. Arrangement selon l'une des revendications 1 à 9, **caractérisé en ce que** la première gorge (23) est prévue à une courte distance de la première extrémité (17) de la première pièce d'accouplement (13) et la seconde gorge (41) à une courte distance de la seconde extrémité (37) de la seconde pièce d'accouplement (15).

11. Arrangement selon l'une des revendications 1 à 10, **caractérisé en ce que** la première et la seconde pièce d'accouplement (13, 15) ont sensiblement la même extension axiale (67, 69).

12. Arrangement selon l'une des revendications 1 à 11, **caractérisé en ce que** laseconde pièce d'accouplement (15) possède, entre le premier moyen d'attaque (51) et le filet intérieur (45), une épaisseur de paroi de 0,5 à 3 mm, de préférence d'1 à 2 mm et de manière tout à fait préférée de 1,2 à 1,7 mm.

13. Arrangement selon l'une des revendications 9 à 12, **caractérisé en ce que** les moyens d'attaque de la première et la seconde pièce d'accouplement (13, 15) sont configurés comme des profils hexagonaux réguliers (33, 51) avec sensiblement les mêmes dimensions.

14. Arrangement selon l'une des revendications 1 à 13, **caractérisé en ce que** lapremière et la seconde pièce d'accouplement (13, 15) sont fabriqués à partir de pièces brutes sensiblement identiques.

15. Arrangement selon l'une des revendications 1 à 14, **caractérisé en ce que** lapremière et la seconde ouverture de passage (21, 39) présentent un diamètre intérieur de 21 à 16 mm, de préférence de 20 à 17 mm et de manière tout à fait préférée de 19 à 18,7 mm.
